# EUROPÄISCHE PATENTSCHRIFT

(11) **EP 2 511 040 B1**
(45) Veröffentlichungstag und Bekanntmachung des Hinweises auf die Patenterteilung: **27.06.2018**
(21) Anmeldenummer: 12002445.0
(22) Anmeldetag: 04.04.2012
(51) Int. Cl.: B23K 26/14, B23K 26/06, G02B 7/14, G02B 7/00, G02B 7/02, B23K 26/70

(54) **Kassetten zur Halterung einer Optik in einem Laserbearbeitungskopf mit einer transparenten Schutzvorrichtung**
Cartridges for holding a lens in a laser machining head with a transparent protective device
Cassettes de support d'une optique dans une tête de traitement au laser avec un dispositif de protection transparent

(30) Priorität: 13.04.2011 DE 102011016932
(43) Veröffentlichungstag der Anmeldung: 17.10.2012
(73) Patentinhaber: Precitec GmbH & Co. KG, 76571 Gaggenau-Bad Rotenfels (DE)
(72) Erfinder: Bert, Schürmann, Dr., 76593 Gernsbach (DE)
(74) Vertreter: Ter Meer Steinmeister & Partner

(56) Entgegenhaltungen:
- DE-A1- 4 317 384
- DE-A1-102007 003 023
- DE-A1-102007 048 617
- DE-C1- 19 858 018
- DE-U1-202004 013 136
- US-A1- 2004 240 493
- US-B1- 6 297 471

## Beschreibung

Die Erfindung betrifft eine Kassette zur Halterung einer Optik, insbesondere einer Fokussieroptik, in einem Laserbearbeitungskopf, sowie einen Laserbearbeitungskopf, der eine solche Kassette umfasst.

Bei der Bearbeitung eines Werkstücks mittels eines Laserbearbeitungskopfes, beispielsweise beim Laserschneiden, ist üblicherweise ein Laserbearbeitungskopf mit einem Gehäuse vorgesehen, wobei ein durch den Laserbearbeitungskopf hindurch laufender Laserstrahl mittels einer Optik so fokussiert wird, dass ein Werkstück bearbeitet werden kann. Die Fokussieroptik selbst unterliegt dabei einem Verschleiß, da bei starker Beanspruchung Risse im Material auftreten oder sie einfach nur verschmutzt. Aus diesem Grund ist ein regelmäßiger Wechsel der Fokussieroptik notwendig, wobei es oftmals wichtig ist, dass ein solcher Wechsel schnell und effizient durchgeführt wird.

Ein Wechsel der Fokussieroptik wird aber auch dann erforderlich, wenn unterschiedliche Brennweiten für die Fokussierung des Laserstrahls benötigt werden.

So ist aus der DE 295 07 189 U1 ein Anschlusskopf zur Bearbeitung eines Werkstücks mittels eines Laserstrahls bekannt, der ein Gehäuse und einen seitlich in das Gehäuse einführbaren, auswechselbaren Einschub mit einer Fokussieroptik umfasst. Der Einschub weist dabei strahleingangsseitige und strahlausgangsseitige Öffnungen auf, wobei die Fokussieroptik zwischen den Öffnungen in das Gehäuse eingesetzt ist.

Ein anderer Ansatz für das Wechseln einer Fokussieroptik ist in DE 196 30 147 A1 beschrieben. Gezeigt ist ein Anschlusskopf zur Bearbeitung eines Werkstücks mittels eines Laserstrahls, der einen im Anschlusskopf angeordneten automatischen Fokussieroptik-Wechselmechanismus aufweist. Der Fokussieroptik-Wechselmechanismus umfasst dabei einen bewegbaren Träger mit mehreren Aufnahmen für entsprechend mehrere Fokussieroptiken, wobei durch eine Bewegung des Trägers nacheinander gleiche oder unterschiedliche Fokussieroptiken im Strahlengang des Lasers positioniert werden können. Sind alle Fokussieroptiken des Wechselmechanismuses verschlissen, so werden diese ausgebaut und ausgewechselt.

Bei den Wechselmechanismen gemäß dem Stand der Technik tritt dabei häufig das Problem auf, dass beim Wechseln der Fokussieroptik, das zumeist in einer verhältnismäßig unreinen Umgebung, wie beispielsweise in Werkstätten geschieht, die Optik verschmutzt. Schmutz auf der Linse verursacht eine erhöhte Erwärmung der Linse durch die Laserstrahlung. Die Linse wird dadurch zu einer thermischen Linse, bei der sich die Fokuslage verschiebt. Der Schneidprozess Laserprozess muss dann im ungünstigsten Fall unterbrochen werden. Deshalb ist es unabdingbar, dass die Linse unmittelbar vor dem Einsetzen in den Laserbearbeitungskopf einfach und schnell gereinigt werden kann. Oftmals ist jedoch das Verhältnis einer Einbautiefe der Linse zum Linsendurchmesser groß, wodurch eine Reinigung der Linse schwierig bis unmöglich ist.

Die DE 20 2004 013 136 U1, die den Oberbegriff der Ansprüche 1, 10 und 13 offenbart, beschreibt eine modulare Lichtwellenoptik. Eine Lichtwellenoptik aus einem Grundträger und zumindest einem Optikmodul, welches wechselbar mit dem Grundträger verbunden ist und unterschiedliche ausgebildet sein kann. Das Optikmodul besitzt ein zylinderrohrförmiges Gehäuse mit einem innenliegenden Strahlkanal. An einem Gehäuseende befindet sich ein Modulanschluss. Am anderen Gehäuseende ist eine Fokussieroptik im Strahlkanal angebracht und in geeigneter Weise stationär gehalten. In Strahlrichtung hinter der Fokussieroptik ist ein Schutzglas angebracht, um die Fokussieroptik gegen Umwelteinflüsse wie beispielsweise Schweißspritzer, Schmauch oder dergleichen zu schützen. Außerdem ist das Optikmodul spritzwasserfest. Das Schutzglas ist dabei in die Öffnung am anderen Gehäuseende des Optikmoduls so eingesetzt, dass es abgesenkt zur Stirnseite des Optikmoduls, welche für den Anschluss eines weiteren Moduls vorgesehen ist, angeordnet ist. Somit bildet die von der Fokussieroptik abgewandte Seite des Schutzglases zusammen mit dem Innenwandbereich des Optikmoduls an der Strahleingangsseite eine umlaufende Innenkante aus.

Die DE 198 58 018 C1 beschreibt eine Vorrichtung zur Durchführung eines Verfahrens zum Schweißen von Metall sowie eine Schutzgasduschvorrichtung hierfür ist in einem ringartigen Gehäuseabschnitt eines Gehäuses mittels eines Distanzringes und eines Sicherungsringes eine Schutzplatte in Form einer Schutzglasscheibe gehalten, die ein in einer Lasereinheit vorgesehenes Linsensystem vor einer Beeinflussung durch Hitze des Schweißbades und der Schweißstelle schützt. Die Schutzglasscheibe kann unterschiedlich dick gestaltet sein. Entsprechend wird die Dicke des Distanzringes angepasst. Falls eine Schutzglasscheibe gewählt wird, die neben der dargestellten Dicke auch noch die gesamte Dicke des Distanzringes umschließt, liegt der Sicherungsring direkt auf der Schutzglasscheibe an. Der Distanzring entfällt in diesem Fall. Sowohl der entsprechende Distanzring als auch die Schutzplatte sowie der Sicherungsring sind lösbar angeordnet, so dass die Schutzplatte je nach Anforderung ausgetauscht werden kann. Die Schutzplatte dient neben dem Schutz des Linsensystems auch zum Schutz des gesamten Laserkopfes gegen Überhitzung und als Spritzschutz gegen Spritzer des Schweißbades.

Die US 6,297,471 B1 beschreibt einen Laserbearbeitungskopf zur Bearbeitung eines Werkstücks mittels eines Laserstrahls eine Linsenkassette innerhalb eines Laserbearbeitungskopfes vorgesehen, wobei hierzu ein Halterohr mit einem Innengewinde vorgesehen ist, in das die Linsenkassette mit entsprechendem Außengewinde einschraubbar ist. Innerhalb der Linsenkassette befindet sich eine Fokussierungsoptik zur Fokussierung eines Laserstrahls. Die Linsenkassette kann strahlausgangsseitig mit einem Schutzglas abgeschlossen sein, dass an der Linsenkassette befestigt ist und strahlausgangsseitig zur Fokussierungsoptik liegt. Durch Einschrauben der Linsenkassette in den strahlausgangsseitigen Abschnitt des Halterohrs lässt sich somit die Fokussierungsoptik in Laserstrahlrichtung relativ zu einem vorderen Kopfteil ziehen des Laserbearbeitungskopfes einstellen bzw. justieren. Die Fokussierungsoptik ist innerhalb der Linsenkassette fest angeordnet.

Die als Druckschrift 6 genannte DE 10 2007 003 023 A1 betrifft einen optoelektronischen Sensor mit Lichtdurchlässigkeitstests der Schutzscheibe durch Totalreflexion. Der Sensor weist in einem Gehäuse einen Bildsensor, eine davor angeordnete Linse und eine transparente Schutzscheibe auf, die vor der Linse angeordnet ist.

Die D6, die sich mit der Überwachung der Schutzscheibe auf Beschädigungen befasst, beschreibt jedoch an keiner Stelle, wie die Schutzscheibe vor der Linse am Gehäuse befestigt ist.

Die als Druckschrift 7 genannte DE 10 2007 048 617 A1 betrifft ein Lasermodul, das über einen primären Abdichtbereich verfügt, der eine vorgebbare Dichtwirkung gegenüber einer Umgebung aufweist und damit das Eindringen von Partikeln aus der Umgebung in das Innere des Lasermoduls verhindert. Der primäre Bereich ist durch ein primäres Gehäuse realisiert, in dem ein sekundäres Gehäuse angeordnet ist, das eine Lasereinrichtung zur Erzeugung von Laserimpulsen aufnimmt. Das sekundäre Gehäuse kann einen im Wesentlichen hohlzylindrischen Grundkörper aufweisen, der stirnseitig als Laserfenster ausgebildete optisch durchlässige Bereiche aufweist, um eine Transmission von Pumplicht zu der Lasereinrichtung und von Laserimpulsen aus dem sekundären Gehäuse heraus zu ermöglichen (vgl. Seite 4, Absatz [0035]).

Der optisch durchlässige Bereich, durch den die Laserimpulse austreten, kann auch als Fokussieroptik ausgebildet sein.

Somit liegt der Erfindung die Aufgabe zugrunde, eine Kassette zur Halterung einer Optik, insbesondere einer Fokussieroptik, in einem Laserbearbeitungskopf, sowie einen Laserbearbeitungskopf mit einer solchen Kassette zu schaffen, bei dem eine Verschmutzung der Optik zumindest stark reduziert und/oder eine Reinigung einfach und schnell durchgeführt werden kann.

Diese Aufgabe wird durch die Kassette sowie durch den Laserbearbeitungskopf gemäß der unabhängigen Ansprüche gelöst. Vorteilhafte Ausgestaltungen und Weiterbildungen der Erfindung sind in den jeweiligen Unteransprüchen dargelegt. Eine Kassette zur Halterung einer Optik in einem Laserbearbeitungskopf gemäß der Erfindung ist im Anspruch 1 definiert. Einschübe zur Halterung einer Kassette in einem Laserbearbeitungskopf gemäß der Erfindung sind in den Ansprüchen 10 und 13 weiter definiert. Um zu verhindern, dass Schmutz durch die andere Öffnung in die Kassette gelangt und die Optik verschmutzt, ist es von Vorteil, eine weitere transparente Schutzvorrichtung der anderen Öffnung des Kassettengehäuses zuzuordnen.

Für eine leichte Reinigung der transparenten Schutzvorrichtung ist es von Vorteil, wenn sie an der der Optik abgewandten Seite eine ebene Fläche aufweist.

In einer besonders einfachen Ausgestaltung der Erfindung ist die transparente Schutzvorrichtung ein Schutzglas.

Anstelle eines Schutzglases kann die transparente Schutzvorrichtung auch eine plan-konvexe oder eine plan-konkave Linse sein.

Um auch ein Eindringen kleinster Schmutzpartikel und/oder Feuchtigkeit in die Kassette zu verhindern, verschließen die beiden transparenten Schutzvorrichtungen in einer bevorzugten Ausführungsform das Kassettengehäuse gasdicht.

Vorzugsweise ist dabei die Kassette mit trockener Luft, Stickstoff oder einem Inertgas gefüllt. So kann verhindert werden, dass bei Temperaturschwankungen in der Umgebung Feuchtigkeit im Kassettengehäuse und insbesondere an der Innenfläche der Schutzvorrichtung auskondensiert. Vorteilhafterweise kann die zumindest eine transparente Schutzvorrichtung mit dem Kassettengehäuse verklebt sein.

Um den Fokus des Laserstrahls variabel einstellen und somit die Fokuslage relativ zu einem Laserbearbeitungskopf justieren zu können, ist es zweckmäßig, wenn die Optik parallel und/oder senkrecht zum Strahlengang eines Lasers bewegbar ist.

Die transparente Schutzvorrichtung kann aber auch auf der die Öffnung umgebenden Außenseite des Kassettengehäuses aufgesetzt sein, so dass im zu säubernden Bereich keine Stufen auftreten und eine Reinigung der transparenten Schutzvorrichtung einfach durchgeführt werden kann.

Hierbei ist es vorteilhaft, die zumindest eine transparente Schutzvorrichtung mit dem Gehäuse zu verkleben.

Um ein Eindringen beispielsweise kleinster Schmutzpartikel und/oder Feuchtigkeit in das Gehäuse des Einschubs zu verhindern, verschließen die beiden transparenten Schutzvorrichtungen in einer bevorzugten Ausführungsform das Gehäuse gasdicht.

Vorzugsweise ist dabei das Gehäuse mit trockener Luft, Stickstoff oder einem Inertgas gefüllt. So kann verhindert werden, dass bei Temperaturschwankungen in der Umgebung Feuchtigkeit im Gehäuse des Einschubs auskondensiert.

Wenn die Kassette innerhalb des Gehäuses parallel und/oder senkrecht zum Strahlengang des Lasers bewegbar ist, um die Fokuslage des Laserstrahls zu verändern, besteht ein weiterer Vorteil darin, verschiedene Werkstücke in unterschiedlichen Abständen zum Laserkopf bearbeiten zu können.

Vorzugsweise weist eine erfindungsgemäße Kassette oder eine erfindungsgemäßer Einschub zumindest einen Deckel zum Verschließen der Öffnung des jeweiligen Gehäuses auf. Der Deckel hat dabei im Bereich der Öffnung eine Ausnehmung, welche einen Eintritt des Laserstrahls in das Gehäuse oder einen Austritt des Laserstrahls aus dem Gehäuse ermöglicht. Die zumindest eine transparente Schutzvorrichtung ist dabei auf einer der Optik abgewandten Außenseite des Deckels aufgesetzt oder in die Ausnehmung eingesetzt.

Dabei ist es bevorzugt, wenn der Deckel auf das Gehäuse aufgeschraubt ist und die zumindest eine transparente Schutzvorrichtung (40, 50) mit dem Deckel (70) verklebt ist.

Die Erfindung wird nachfolgend unter Bezugnahme auf die Zeichnung beispielsweise näher beschrieben. Es zeigen:
Figur 1 eine schematische Schnittansicht einer ersten Ausführungsform einer erfindungsgemäßen Kassette.
Figur 2 eine schematische Schnittansicht einer zweiten Ausführungsform einer erfindungsgemäßen Kassette.
Figur 3 eine schematische Schnittansicht einer dritten Ausführungsform einer erfindungsgemäßen Kassette.
Figur 4 eine schematische Schnittansicht einer vierten Ausführungsform einer erfindungsgemäßen Kassette.
Figur 5 eine schematische Schnittansicht einer fünften Ausführungsform einer erfindungsgemäßen Kassette.
Figur 6 eine schematische Schnittansicht einer ersten Ausführungsform eines erfindungsgemäßen Einschubs.
Figur 7 eine schematische Schnittansicht einer zweiten Ausführungsform eines erfindungsgemäßen Einschubs.
Figur 8 eine schematische Schnittansicht einer sechsten Ausführungsform einer erfindungsgemäßen Kassette.
Figur 9 eine schematische Schnittansicht einer dritten Ausführungsform eines erfindungsgemäßen Einschubs.

In den verschiedenen Figuren der Zeichnung sind einander entsprechende Bauelemente mit gleichen Bezugszeichen versehen.

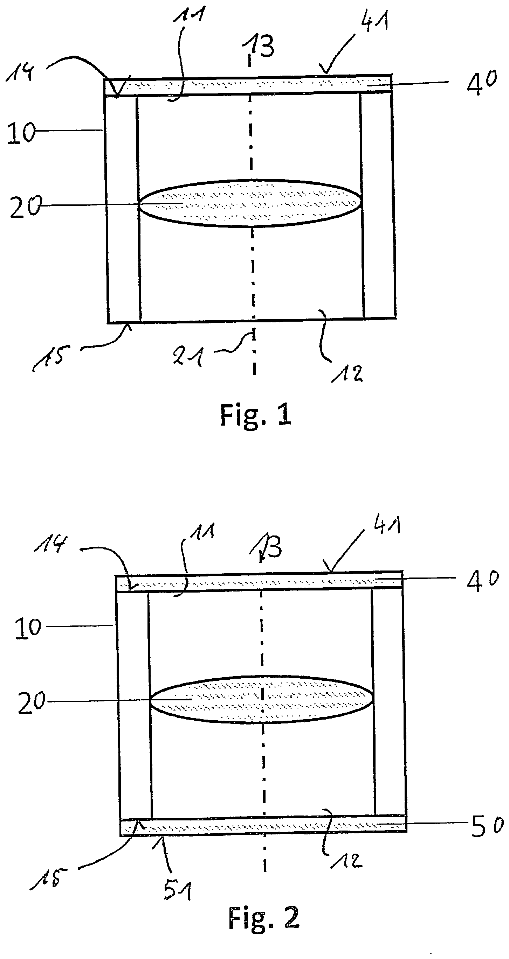

Figur 1 zeigt eine erste Kassette, wie sie in einem Laserbearbeitungskopf verwendet werden kann, die ein Kassettengehäuse 10 mit einer strahleingangsseitigen und einer strahlausgangsseitigen Öffnung 11, 12 aufweist. Eine Optik 20 ist in das Kassettengehäuse 10 eingesetzt, wobei die Optik 20 beispielsweise eine Linse ist. Die Optik 20 kann allerdings auch aus mehreren optischen Komponenten bestehen. Beispielsweise können mehrere Linsen verwendet werden. Vorzugsweise ist dabei eine optische Achse 21 der Optik 20 parallel zu einer Achse 13 des Kassettengehäuses 10. Im dargestellten Ausführungsbeispiel ist der in der Figur oben liegenden strahleingangsseitigen Öffnung eine transparente Schutzvorrichtung 40 zugeordnet. Hierdurch wird eine Verschmutzung der Optik 20 und somit das Entstehen einer thermischen Linse, bei der der Fokus verschoben ist, verhindert. Je nach Einbaulage der Kassette 10 in einem Laserbearbeitungskopf kann die Schutzvorrichtung 40 auch der strahlausgangsseitigen Öffnung 12 zugeordnet sein, wenn die Verschmutzungsgefahr dort größer ist.

Wie in Figur 2 gezeigt ist, kann die erfindungsgemäße Kassette auch zwei transparente Schutzvorrichtungen 40, 50 aufweisen, wobei die eine transparent Schutzvorrichtung 40 der strahleingangsseitigen Öffnung 11 und die andere transparente Schutzvorrichtung 50 der strahlausgangsseitigen Öffnung 12 zugeordnet ist. Durch das Anbringen zweier transparenter Schutzvorrichtungen 40, 50 kann die Kassette beispielsweise gasdicht verschlossen und, falls erforderlich, das Innere des Kassettengehäuses 10 beispielsweise mit trockener Luft, Stickstoff oder einem Inertgas gefüllt werden. So wird zum Beispiel bei Schwankungen der Umgebungstemperatur eine Auskondensieren von Feuchtigkeit im Kassettengehäuse 10 und ein Beschlagen der Schutzvorrichtungen 40, 50 verhindert.

Im Folgenden sind unter Bezugnahme auf die Figuren 1 bis 4 beispielhafte Befestigungsmöglichkeiten einer transparenten Schutzvorrichtung 40, 50 am Kassettengehäuse 10 beschrieben. Die Folgenden Ausführungen gelten dabei sowohl für eine transparente Schutzvorrichtung 40, die an der strahleingangsseitigen Öffnung 11 des Kassettengehäuses 10 befestigt wird, als auch für eine transparente Schutzvorrichtungen 50, die an der strahlausgangsseitigen Öffnung 12 des Kassettengehäuses 10 befestigt wird.

Bezug nehmend auf die Figuren 1 und 2 ist gemäß der Erfindung die jeweilige transparente Schutzvorrichtung 40, 50 auf einer die Öffnung 11, 12 umgebenden Außenseite des Kassettengehäuses 10, z. B. einer oberen bzw. unteren Stirnfläche 14 bzw. 15 aufgesetzt. Vorzugsweise sind dabei der zur Achse 13 senkrecht gemessene Durchmesser der transparenten Schutzvorrichtung 40, 50 und ein äußerer Durchmesser des Kassettengehäuses 10 im Wesentlichen gleich. Die Durchmesser können aber in anderen Ausführungsformen auch verschieden sein.

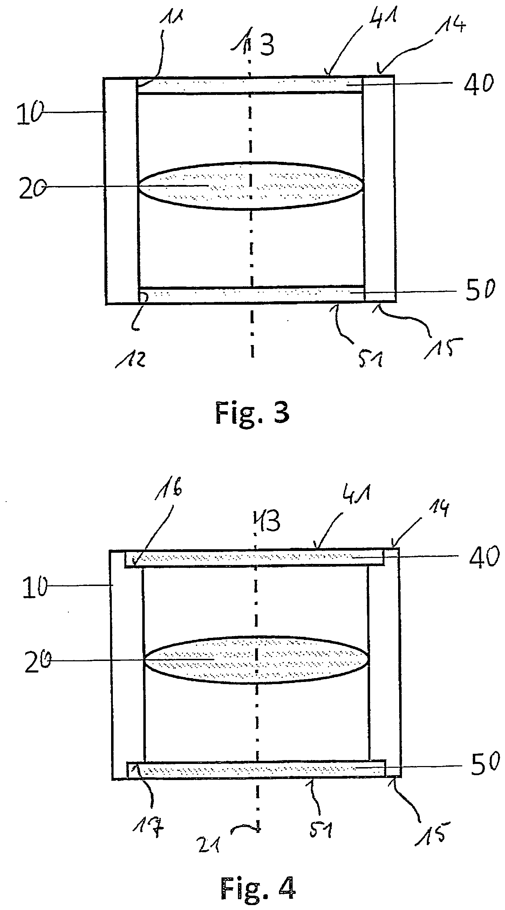

Wie in Figur 3 gezeigt ist, ist gemäß der Erfindung die transparente Schutzvorrichtung 40, 50 so in die jeweilige Öffnung des Kassettengehäuses 10 eingesetzt, dass deren von der Optik 20 abgewandte Fläche im Wesentlichen mit der die Öffnung umgebenden Außenseite des Kassettengehäuses 10, d. h. den Stirnflächen 14, 15, fluchtet. Vorzugsweise sind dabei der zur Achse 13 senkrecht gemessene Durchmesser der transparenten Schutzvorrichtung 40, 50 und ein innerer Durchmesser des Kassettengehäuses 10 im Wesentlichen gleich.

Figur 4 zeigt eine weitere Möglichkeit, wie die transparente Schutzvorrichtung 40, 50 mit der die Öffnung 11, 12 umgebenden Stirnseite 14, 15 fluchtend in das Kassettengehäuse 10 eingesetzt wird. Das Kassettengehäuse 10 weist dabei an seinen jeweiligen Enden eine Stufe mit einer Schulter 16, 17 auf. Der zur Achse 13 senkrecht gemessene Durchmesser der transparenten Schutzvorrichtung 40, 50 ist dabei so gewählt, dass die in die Stufe eingesetzte Schutzvorrichtung 40, 50 mit ihrem Außenumfang im Wesentlichen bündig am entsprechenden Innenumfang der Stufe anliegt. Die Dicke der transparenten Schutzvorrichtung 40, 50 ist so gewählt, dass die Außenflächen 41, 51 der Schutzvorrichtung 40, 50 im Wesentlichen mit den Stirnflächen 14, 15 in einer Ebene liegen.

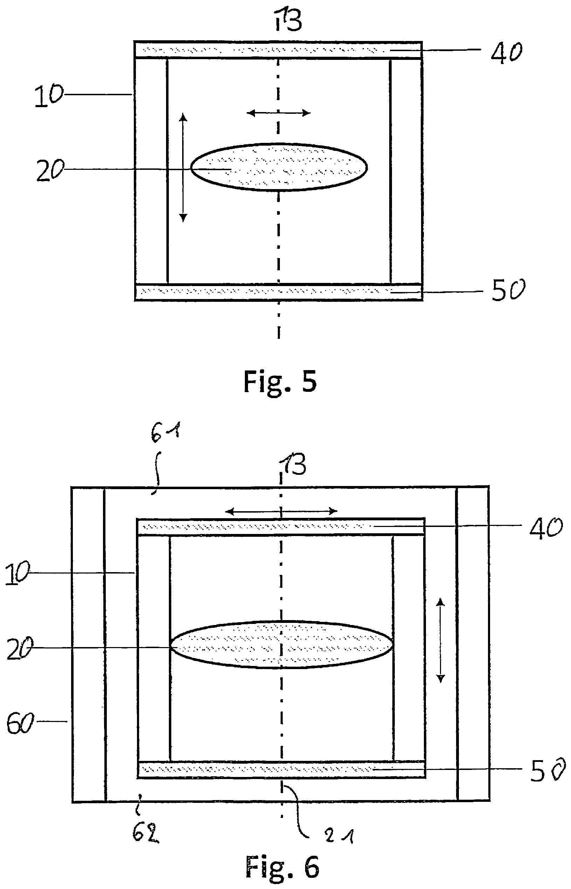

Im in Figur 5 gezeigten Ausführungsbeispiel ist die Optik 20 beweglich innerhalb des Kassettengehäuses 10 angeordnet, so dass die Fokuslage eines Laserstrahls justiert werden kann. Die wenigstens eine transparente Schutzvorrichtung 40, 50 ist gemäß der Erfindung dabei, wie es oben in Bezug auf die Figuren 1 bis 4 beschrieben ist, in das Kassettengehäuse 10 eingesetzt oder auf das Kassettengehäuse 10 aufgesetzt. Figur 6 zeigt einen erfindungsgemäßen Einschub in dessen Gehäuse 60 eine erfindungsgemäße Kassette, wie sie unter Bezugnahme auf die Figuren 1 bis 5 beschrieben ist, eingesetzt ist. Das Gehäuse 60 umfasst dabei eine strahleingangsseitige und eine strahlausgangsseitige Öffnung 61, 62. Die Kassette ist vorzugsweise innerhalb des Gehäuses 60 parallel und/oder senkrecht zum Laserstrahlengang 21 bewegbar, so dass der Fokus des Laserstrahls variabel eingestellt werden kann.

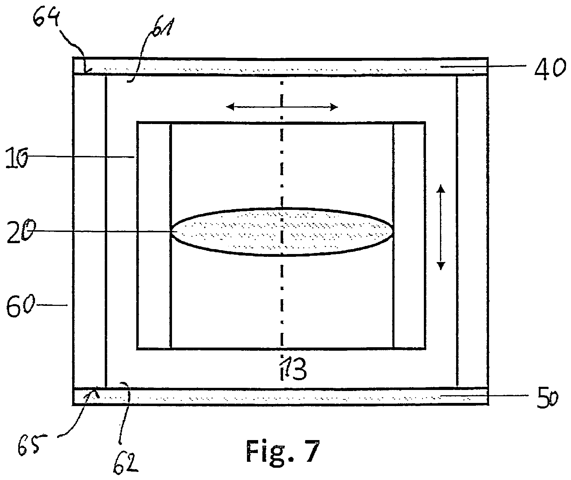

Figur 7 zeigt einen erfindungsgemäßen Einschub mit einer Kassette gemäß einer zweiten Ausführungsform. Analog zur in Figur 6 gezeigten Ausführungsform ist in ein Gehäuse 60 des Einschubs eine erfindungsgemäße Kassette eingesetzt. Die transparente Schutzvorrichtung 40, 50 ist dabei allerdings nicht an der Kassette, sondern am Gehäuse 60 des Einschubs befestigt. Beim erfindungsgemäßen Einschub können dabei, analog zur oben beschriebenen erfindungsgemäßen Kassette, eine transparente Schutzvorrichtung 40, 50 an der strahleingangsseitigen und/oder der strahlausgangsseitigen Öffnung 61, 62 vorhanden sein. Die Befestigungsmöglichkeiten der jeweiligen transparenten Schutzvorrichtung' 40, 50 am Gehäuse 60 sind analog zu denen der transparenten Schutzvorrichtung 40, 50 am Kassettengehäuse 10, wie es in den Figuren 1 bis 5 dargestellt und oben beschrieben ist. Gemäß der Erfindung sind die transparente Schutzvorrichtung 40, 50 in eine jeweilige die Öffnung 61, 62 des Gehäuses 60 eingesetzt, so dass deren von der Optik 20 abgewandte Seite mit der die Öffnung umgebenden Außenseite insbesondere der jeweiligen Stirnfläche 64, 65 (nicht dargestellt) fluchtet. Die transparente Schutzvorrichtung 40, 50 kann aber auch wie gezeigt auf der Stirnfläche 64, 65 aufgesetzt sein. Auch kann, wie es in Figur 7 gezeigt ist, die Kassette innerhalb des Gehäuses 60 bewegbar angeordnet sein, so dass der Fokus des Laserstrahls variabel eingestellt werden kann.

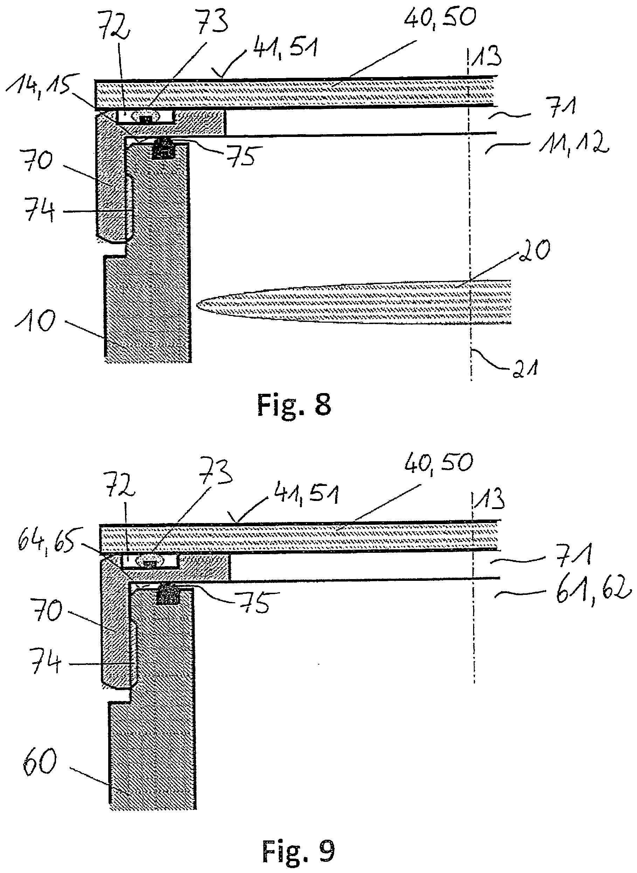

Figur 8 zeigt eine weitere Ausführungsform der erfindungsgemäßen Kassette. Diese Ausführungsform unterscheidet sich von den in den Figuren 1 bis 5 gezeigten dadurch, dass sie weiter zumindest einen Deckel 70 umfasst, welcher auf eine Öffnung 11, 12 des Kassettengehäuses 10 aufgesetzt ist. Der Deckel 70 weist eine Ausnehmung 71 auf, durch welche ein Laserstrahl in das Kassettengehäuse 10 ein- oder aus dem Kassettengehäuse 10 austreten kann. Auf einer Außenseite des Deckels 70 ist die transparente Schutzvorrichtung 40, 50 so angeordnet, dass sie die Ausnehmung 71 verschließt. Die transparente Schutzvorrichtung 40, 50 ist dabei vorzugsweise mit dem Deckel 70 verklebt. Hierzu weist der Deckel an seiner die Ausnehmung 71 umgebenden Außenseite eine Umfangsnut 72 auf, in welche geeigneter Klebstoff, beispielsweiße Epoxydharz, eingebracht ist, um den Deckel 70 mit der transparenten Schutzvorrichtung 40, 50 klebend zu verbinden. Gemäß der Erfindung fluchtet der Schutzglasrand mit der äußeren Umfangsfläche des Deckels 70.

Die transparente Schutzvorrichtung 40, 50 kann jedoch auch in die Ausnehmung 71 des Deckels 70 eingesetzt sein (nicht gezeigt). Hierfür ist es gemäß der Erfindung, dass die von der Optik abgewandte Seite der transparenten Schutzvorrichtung 40, 50 eben ausgebildet ist und mit der die Ausnehmung (71) umgebenden Stirnseite des Deckels 70 fluchtet, um keine Kante in der Oberfläche aufzuweisen.

Wie in Figur 8 weiter gezeigt ist, besitzt der Deckel 70 einen L-förmigen Querschnitt und ist auf das Kassettengehäuse 10 aufgeschraubt. Hierfür weisen ein innerer Umfang des Deckels 70 und ein äußerer Umfang des Kassettengehäuses 10, die im Wesentlichen gleich sind, entsprechende Gewinde 74 auf. Vorzugsweise ist das Gewinde 74 des Deckels 70 in einem Stufenbereich desselben ausgebildet. Dabei ist der äußere Umfang des Deckels 70 vorzugsweise bündig mit dem äußeren Umfang des Kassettengehäuses 10 ausgebildet, sodass der Deckel 70 nicht über das Kassettengehäuse 10 übersteht.

Auf der die Öffnung 11, 12 umgebenden Außenseite 14, 15 des Kassettengehäuses 10 ist eine Umfangsnut ausgebildet, in der eine Dichtung 75, beispielsweise ein O-Ring, angeordnet ist. Wenn der Deckel 70 auf das Kassettengehäuse 10 aufgeschraubt wird, wird die Dichtung 75 zwischen Deckel 70 und Kassettengehäuse 10 gequetscht, wodurch das Kassettengehäuse 10 an dieser Stelle gasdicht verschlossen wird.

Figur 9 zeigt eine weitere Ausführungsform des erfindungsgemäßen Einschubs, welcher in Analogie zur Kassette aus Figur 8 einen Deckel 70 aufweist, an welchem die transparente Schutzvorrichtung 40, 50 befestigt ist. Bezüglich der Figur 9 wird daher auf die Ausführungen zur Figur 8 verwiesen.

Durch das Anbringen zweier transparenter Schutzvorrichtungen 40, 50, wie es in Figur 7 dargestellt ist, kann das Gehäuse 60 beispielsweise gasdicht verschlossen und, falls erforderlich, sein Inneres beispielsweise mit trockener Luft, Stickstoff oder einem Inertgas gefüllt werden. So wird zum Beispiel bei Schwankungen der Umgebungstemperatur eine Auskondensieren von Feuchtigkeit innerhalb des Gehäuses 60 verhindert.

Hierbei kann die transparente Schutzvorrichtung 40, 50 mit dem Gehäuse 10, 60 verklebt sein. Die transparente Schutzvorrichtung 40, 50 weist an der der Optik 20 abgewandten Seite eine ebene Fläche auf, so dass diese leicht gereinigt werden kann. Wie oben kann die transparente Schutzvorrichtung 40, 50 ein Schutzglas, eine plan-konvexe oder eine plan-konkave Linse sein. In einem Ausführungsbeispiel, in dem zwei transparente Schutzvorrichtungen 40, 50 vorgesehen sind, können diese die gleichen oder verschiedene sein. Beispielsweise kann die eine transparente Schutzvorrichtung eine Linse und die andere ein Schutzglas sein.

Somit wird erfindungsgemäß eine Kassette mit einer Optik und ein Einschub mit einer solchen Kassette geschaffen, die zum Einsatz in einem Laserbearbeitungskopf vorgesehen sind. Die Kassette oder der Einschub umfassen dabei an der strahleingangsseitigen und/oder der strahlausgangsseitigen Öffnung transparente Schutzvorrichtungen, so dass die Optik beim Wechseln der Kassette oder des Einschubs nicht verschmutz und eine einfache Reinigung der transparenten Schutzvorrichtung ermöglich wird, da sich diese an leicht zugänglichen Stellen befindet. Erfindungsgemäß kann also eine thermische Linse, verursacht durch Schmutz auf der Optik, verhindert werden, was zu einer erhöhten Zuverlässigkeit beispielsweise eines Schweiß- oder Schneidprozesses, der mit dem Laserbearbeitungskopf ausgeführt wird, führt.

## Patentansprüche

1. Auswechselbare Kassette zur Halterung einer Optik (20) in einem Laserbearbeitungskopf, mit
- einem Kassettengehäuse (10) mit einer strahleingangsseitigen (11) und einer strahlausgangsseitigen Öffnung (12), in das die Optik (20) eingesetzt ist; und
- mindestens einer transparenten Schutzvorrichtung (40), die der strahleingangsseitigen Öffnung (11) oder der strahlausgangsseitigen Öffnung (12) des Kassettengehäuses (10) zugeordnet ist, um die Optik (20) vor Verunreinigungen zu schützen,
wobei die transparente Schutzvorrichtung (40, 50) an der der Optik (20) abgewandten Seite eine ebene Fläche (41, 51) aufweist, **dadurch gekennzeichnet, dass**
- die zumindest eine transparente Schutzvorrichtung (40, 50) so in die jeweilige Öffnung (11, 12) des Kassettengehäuses (10) eingesetzt ist, dass deren von der Optik abgewandte Fläche im Wesentlichen mit einer die Öffnung (11, 12) umgebenden Außenseite des Kassettengehäuses (10) fluchtet, oder
- die zumindest eine transparente Schutzvorrichtung (40, 50) auf einer die Öffnung (11, 12) umgebenden Außenseite des Kassettengehäuses (10) aufgesetzt ist.

2. Kassette nach Anspruch 1, **dadurch gekennzeichnet, dass** eine weitere transparente Schutzvorrichtung (50) der anderen Öffnung des Kassettengehäuses (10) zugeordnet ist.

3. Kassette nach Anspruch 2, **dadurch gekennzeichnet, dass** die beiden transparenten Schutzvorrichtungen (40, 50) die jeweiligen Öffnungen (11, 12) gasdicht verschließen, wobei die Kassette vorzugsweise mit Stickstoff oder einem Inertgas gefüllt ist.

4. Kassette nach einem der vorstehenden Ansprüche, **dadurch gekennzeichnet, dass** die zumindest eine transparente Schutzvorrichtung (40, 50) mit dem Kassettengehäuse (10) verklebt ist.

5. Kassette nach einem der Ansprüche 1 bis 3, weiter umfassend zumindest einen Deckel (70) zum Verschließen der Öffnung (11, 12) des Kassettengehäuses (10),
wobei der Deckel (70) im Bereich der Öffnung (11, 12) eine Ausnehmung (71) aufweist, welche vorgesehen ist, um einen Eintritt des Laserstrahls in das Kassettengehäuse (10) oder einen Austritt des Laserstrahls aus dem Kassettengehäuse (10) zu ermöglichen, und
wobei die transparente Schutzvorrichtung (40, 50) auf einer der Optik abgewandten Außenseite (14, 15) des Deckels (70) aufgesetzt oder in die Ausnehmung (71) eingesetzt ist.

6. Kassette nach Anspruch 5, wobei der Deckel (70) auf das Kassettengehäuse (10) aufgeschraubt ist, und wobei die transparente Schutzvorrichtung (40, 50) mit dem Deckel (70) verklebt ist.

7. Kassette nach einem der vorstehenden Ansprüche, **dadurch gekennzeichnet, dass** die zumindest eine transparente Schutzvorrichtung (40, 50) ein Schutzglas, eine plan-konvexe oder eine plan-konkave Linse ist.

8. Kassette nach einem der vorstehenden Ansprüche, **dadurch gekennzeichnet, dass** im Kassettengehäuse (10) die Optik (20) parallel und/oder senkrecht zum Laserstrahlengang bewegbar ist.

9. Einschub zur Halterung einer Kassette in einem Laserbearbeitungskopf mit einem Gehäuse (60), das strahleingangsseitige und strahlausgangsseitige Öffnungen (61, 62) aufweist, und einer in das Gehäuse (60) eingesetzten, auswechselbaren Kassette nach einem der Ansprüche 1 bis 8, wobei die Kassette in dem Gehäuse (60) parallel und/oder senkrecht zum Laserstrahlengang bewegbar ist.

10. Einschub zur Halterung einer Kassette in einem Laserbearbeitungskopf mit einem Gehäuse (60) und einer in das Gehäuse (60) eingesetzten Kassette zur Halterung einer Optik (20), mit einem Kassettengehäuse (10) mit einer strahleingangsseitigen (11) und einer strahlausgangsseitigen Öffnung (12), in das die Optik (20) eingesetzt ist, wobei das Gehäuse (60) entsprechende strahleingangsseitige und strahlausgangsseitige Öffnungen (61, 62) aufweist, **dadurch gekennzeichnet, dass**
- die mindestens eine transparente Schutzvorrichtung (40, 50) so in die jeweilige Öffnung (61, 62) des Gehäuses (60) eingesetzt ist, dass deren von der Optik abgewandte ebene Fläche im Wesentlichen mit einer die Öffnung umgebenden Außenseite des Gehäuses (60) fluchtet, oder
- die mindestens eine transparente Schutzvorrichtung (40, 50) auf einer die Öffnung (61, 62) umgebenden Außenseite des Gehäuses (60) aufgesetzt ist.

11. Einschub nach Anspruch 10, **dadurch gekennzeichnet, dass** die beiden transparenten Schutzvorrichtungen (40, 50) die jeweiligen Öffnungen gasdicht verschließen, wobei der Einschub vorzugsweise mit Stickstoff oder einem Inertgas gefüllt ist.

12. Einschub nach Anspruch 10 oder 11, **dadurch gekennzeichnet, dass** die zumindest eine transparente Schutzvorrichtung (40, 50) mit dem Gehäuse (60) verklebt ist.

13. Einschub zur Halterung einer Kassette in einem Laserbearbeitungskopf mit einem Gehäuse (60), das strahleingangsseitige und strahlausgangsseitige Öffnungen (61, 62) aufweist, und einer in das Gehäuse (60) eingesetzten, auswechselbaren Kassette zur Halterung einer Optik (20), mit einem Kassettengehäuse (10) mit einer strahleingangsseitigen Öffnung (11) und einer strahlausgangsseitigen Öffnung (12), in das die Optik (20) eingesetzt ist, wobei der Einschub weiter zumindest einen Deckel (70) zum Verschließen zumindest einer der Öffnungen (61, 62) des Gehäuses (60) umfasst,
wobei der Deckel (70) im Bereich der Öffnung (61, 62) eine Ausnehmung (71) aufweist, welche vorgesehen ist, um einen Eintritt des Laserstrahls in das Gehäuse (60) oder einen Austritt des Laserstrahls aus dem Gehäuse (60) zu ermöglichen, **dadurch gekennzeichnet, dass**
eine transparente Schutzvorrichtung (40, 50) auf einer der Optik abgewandten Außenseite (64, 65) des Deckels (70) aufgesetzt oder in die Ausnehmung (71) mit der die Ausnehmung (71) umgebenden Stirnseite des Deckels (70) fluchtend eingesetzt ist.

14. Einschub nach Anspruch 13, wobei der Deckel (70) auf das Gehäuse (60) aufgeschraubt ist, und wobei die transparente Schutzvorrichtung (40, 50) mit dem Deckel (70) verklebt ist.

15. Einschub nach einem der Ansprüche 10 bis 14, wobei die Kassette im Gehäuse (60) parallel und/oder senkrecht zum Laserstrahlengang bewegbar ist.

## Claims

1. A replaceable cassette for holding an optics (20) in a laser machining head, comprising:
- a cassette housing (10) having a beam input side aperture (11) and a beam output side aperture (12), into which said optics (20) is inserted; and
- at least one transparent protection device (40) assigned to said beam input side aperture (11) or said beam output side aperture (12) of said cassette housing (10) for protecting said optics (20) from contamination,
wherein said transparent protection device (40, 50) has a planar surface (41, 51) on the side facing away from said optics (20), **characterized in that**
- said at least one transparent protection device (40, 50) is inserted into the respective aperture (11, 12) of said cassette housing (10) such that the surface thereof facing away from said optics is substantially flush with an outer side of said cassette housing (10) surrounding the aperture (11, 12), or
- said at least one transparent protection device (40, 50) is placed on an outer side of said cassette housing (10) surrounding said aperture (11, 12).

2. The cassette according to claim 1, **characterized in that** a further transparent protection device (50) is assigned to the other aperture of said cassette housing (10).

3. The cassette according to claim 2, **characterized in that** the two transparent protection devices (40, 50) close the respective apertures (11, 12) in a gas-tight manner, wherein said cassette is preferably filled with nitrogen or an inert gas.

4. The cassette according to any one of the preceding claims, **characterized in that** said at least one transparent protection device (40, 50) is glued to said cassette housing (10).

5. The cassette according to any one of the claims 1 to 3, further comprising at least one lid (70) for closing said aperture (11, 12) of said cassette housing (10),
wherein said lid (70) has a recess (71) in the region of said aperture (11, 12), said recess being provided to allow an input of the laser beam into said cassette housing (10) or an output of the laser beam from said cassette housing (10), and
wherein said transparent protection device (40, 50) is placed on an outer side (14, 15) of said lid (70) facing away from said optics or is inserted into said recess (71).

6. The cassette according to claim 5, wherein said lid (70) is screwed onto said cassette housing (10), and wherein said transparent protection device (40, 50) is glued to said lid (70).

7. The cassette according to one of the preceding claims, **characterized in that** said at least one transparent protection device (40, 50) is a protective glass, a plano-convex lens, or a plano-concave lens.

8. The cassette according to one of the preceding claims, **characterized in that** said optics (20) is movable in parallel and/or perpendicularly to the laser beam path in said cassette housing (10).

9. A module for holding a cassette in a laser machining head comprising a housing (60) having beam input side and beam output side apertures (61, 62) and a replaceable cassette according to one of claims 1 to 8 inserted into said housing (60), wherein said cassette is movable in parallel and/or perpendicularly to the laser beam path in said housing (60).

10. The module for holding a cassette in a laser machining head comprising a housing (60) and a cassette inserted into said housing (60) for holding an optics (20) which comprises a cassette housing (10) having a beam input side aperture (11) and a beam output side aperture (12), into which said optics (20) is inserted, wherein said housing (60) has corresponding beam input side and beam output side apertures (61, 62), **characterized in that**
- said at least one transparent protection device (40, 50) is inserted into the respective aperture (61, 62) of said housing (60) such that the surface thereof facing away from said optics is substantially aligned with an outer side of said cassette housing (60) surrounding the aperture, or
- said at least one transparent protection device (40, 50) is placed on an outer side of said housing (60) surrounding the aperture (61, 62).

11. The module according to claim 10, **characterized in that** said two transparent protection devices (40, 50) close the respective apertures in a gas-tight manner, wherein said module is preferably filled with nitrogen or an inert gas.

12. The module according to claim 10 or 11, **characterized in that** said at least one transparent protection device (40, 50) is glued to said housing (60).

13. A module for holding a cassette in a laser machining head comprising a housing (60) having beam input side and beam output side apertures (61, 62) and a replaceable cassette inserted into said housing (60) for holding an optics (20), which comprises a cartridge housing (10) having a beam input side aperture (11) and a beam output side aperture (12), into which said optics (20) is inserted, said module further comprising at least one lid (70) for closing at least one of the apertures (61, 62) of said housing (60),
wherein said lid (70) has a recess (71) in the region of the aperture (61, 62), said recess being provided to allow an input of the laser beam into said housing (60) or an output of the laser beam from said housing (60), **characterized in that**
a transparent protection device (40, 50) is placed on an outer side (64, 65) of said lid (70) facing away from said optics or is inserted into said recess (71) such that it is flush with the end face of said lid (70) surrounding said recess (71).

14. The module according to claim 13, wherein said lid (70) is screwed onto said housing (60), and wherein said transparent protection device (40, 50) is glued to said lid (70).

15. The module according to one of claims 10 to 14, wherein said cassette is movable in parallel and/or perpendicularly to the laser beam path in said housing (60).

## Revendications

1. Cassette interchangeable pour retenir une optique (20) dans une tête de traitement au laser, comportant
- un boîtier de cassette (10) pourvu d'une ouverture (11) côté entrée de rayon et d'une ouverture (12) côté sortie de rayon, dans lequel l'optique (20) est mise en place ; et
- au moins un dispositif de protection transparent (40) qui est associé à l'ouverture (11) côté entrée de rayon ou à l'ouverture (12) côté sortie de rayon du boîtier de cassette (10) pour protéger l'optique (20) vis-à-vis des encrassements,
le dispositif de protection transparent (40, 50) présentant une surface plane (41, 51) sur le côté détourné de l'optique (20),
**caractérisée en ce que**
- ledit au moins un dispositif de protection transparent (40, 50) est mis en place dans l'ouverture respective (11, 12) du boîtier de cassette (10) de telle sorte que sa surface détournée de l'optique est sensiblement en alignement avec un côté extérieur du boîtier de cassette (10), qui entoure l'ouverture (11, 12), ou
- ledit au moins un dispositif de protection transparent (40, 50) est posé sur un côté extérieur du boîtier de cassette (10), qui entoure l'ouverture (11, 12).

2. Cassette selon la revendication 1, **caractérisée en ce qu'**un autre dispositif de protection transparent (50) est associé à l'autre ouverture du boîtier de cassette (10).

3. Cassette selon la revendication 2, **caractérisée en ce que** les deux dispositifs de protection transparents (40, 50) referment avec étanchéité aux gaz les ouvertures respectives (11, 12), la cassette étant remplie de préférence avec de l'azote ou avec un gaz inerte.

4. Cassette selon l'une des revendications précédentes, **caractérisée en ce que** ledit au moins un dispositif de protection transparent (40, 50) est assemblé par collage au boîtier de cassette (10).

5. Cassette selon l'une des revendications 1 à 3, comprenant en outre au moins un couvercle (70) pour refermer l'ouverture (11, 12) du boîtier de cassette (10),
dans laquelle, au niveau de l'ouverture (11, 12), le couvercle (70) présente un évidement (71) qui est prévu pour permettre une entrée du rayon laser dans le boîtier de cassette (10) ou une sortie du rayon laser hors du boîtier de cassette (10), et
le dispositif de protection transparent (40, 50) est posé sur un côté extérieur (14, 15) du couvercle (70) détourné de l'optique ou est mis en place dans l'évidement (71).

6. Cassette selon la revendication 5, dans laquelle le couvercle (70) est vissé sur le boîtier de cassette (10), et le dispositif de protection transparent (40, 50) est assemblé par collage au couvercle (70).

7. Cassette selon l'une des revendications précédentes, **caractérisée en ce que** ledit au moins un dispositif de protection transparent (40, 50) est un verre de protection, une lentille plane-convexe ou une lentille plane-concave.

8. Cassette selon l'une des revendications précédentes, **caractérisée en ce que** l'optique est mobile dans le boîtier de cassette (10) parallèlement et/ou perpendiculairement au trajet du rayon laser.

9. Insert pour retenir une cassette dans une tête de traitement au laser, comportant un boîtier (60) qui présente des ouvertures (61, 62) côté entrée de rayon et côté sortie de rayon, et une cassette interchangeable selon l'une des revendications 1 à 8 mise en place dans le boîtier (60), dans lequel, dans le boîtier (60), la cassette est mobile parallèlement et/ou perpendiculairement au trajet de rayon laser.

10. Insert pour retenir une cassette dans une tête de traitement au laser, comportant un boîtier (60) et une cassette mise en place dans le boîtier (60) pour retenir une optique (20), comportant un boîtier de cassette (10) pourvu d'une ouverture (11) côté entrée de rayon et d'une ouverture (12) côté sortie de rayon, dans lequel l'optique (20) est mise en place, le boîtier (60) ayant des ouvertures correspondantes (61, 62) côté entrée de rayon et côté sortie de rayon, **caractérisé en ce que**
- ledit au moins un dispositif de protection transparent (40, 50) est mis en place dans l'ouverture respective (61, 62) du boîtier (60) de telle sorte que sa surface plane détournée de l'optique est sensiblement en alignement avec un côté extérieur du boîtier (60), qui entoure l'ouverture, ou
- ledit au moins un dispositif de protection transparent (40, 50) est posé sur un côté extérieur du boîtier (60), qui entoure l'ouverture (61, 62).

11. Insert selon la revendication 10, **caractérisé en ce que** les deux dispositifs de protection transparents (40, 50) referment avec étanchéité aux gaz les ouvertures respectives, l'insert étant rempli de préférence avec de l'azote ou avec un gaz inerte.

12. Insert selon la revendication 10 ou 11, **caractérisé en ce que** ledit au moins un dispositif de protection transparent (40, 50) est assemblé par collage au boîtier (60).

13. Insert pour retenir une cassette dans une tête de traitement au laser, comportant un boîtier (60) qui présente des ouvertures (61, 62) côté entrée de rayon et côté sortie de rayon, et une cassette interchangeable mise en place dans le boîtier (60) pour retenir une optique (20), comportant un boîtier de cassette (10) pourvu d'une ouverture (11) côté entrée de rayon et d'une ouverture (12) côté sortie de rayon, dans lequel l'optique (20) est mise en place, l'insert comprenant en outre au moins un couvercle (70) pour refermer l'une au moins des ouvertures (61, 62) du boîtier (60),
dans lequel, au niveau de l'ouverture (61, 62), le couvercle (70) présente un évidement (71) qui est prévu pour permettre une entrée du rayon laser dans le boîtier (60) ou une sortie du rayon laser hors du boîtier (60),
**caractérisé en ce que**
un dispositif de protection transparent (40, 50) est posé sur un côté extérieur (64, 65) du couvercle (70) détourné de l'optique ou est mis en place dans l'évidement (71) en étant en alignement avec le côté frontal du couvercle (70) entourant l'évidement (71).

14. Insert selon la revendication 13, dans lequel le couvercle (70) est vissé sur le boîtier (60), et le dispositif de protection transparent (40, 50) est assemblé par collage au couvercle (70).

15. Insert selon l'une des revendications 10 à 14, dans lequel la cassette est mobile dans le boîtier (60) parallèlement et/ou perpendiculairement au trajet de rayon laser.
